# EUROPÄISCHE PATENTANMELDUNG

(11) **EP 1 524 063 A1**
(43) Veröffentlichungstag der Anmeldung: **20.04.2005**
(21) Anmeldenummer: 03022478.6
(22) Anmeldetag: 08.10.2003
(51) Int. Cl.: B23K 26/38, B26F 1/38, B26F 1/26, B26D 5/00, A41H 43/02, G05B 19/12, B21D 28/02

(54) **Markierungsvorrichtung und Ablaufsteuerverfahren für geschnittene oder gestanzte Werkstücke einer Platte**

(71) Anmelder: TRUMPF Werkzeugmaschinen GmbH + Co. KG, 71254 Ditzingen (DE)
(72) Erfinder: Eppinger, Michael, 71254 Ditzingen (DE)
(74) Vertreter: Rank, Christoph

(57) **Zusammenfassung**

Eine Vorrichtung (1) zur Markierung von Werkstücken (2), die in eine Platte (3) geschnitten oder gestanzt sind, weist mindestens einen Projektor (4) auf, der unterschiedliche optische Markierungen (M₁ - M₄) auf die geschnittenen bzw. gestanzten Werkstücke (2) projiziert. Die Werkstücke (2) werden dann entsprechend ihrer optischen Markierung (M₁ - M₄) weiterverarbeitet.

## Beschreibung

Die vorliegende Erfindung betrifft eine Vorrichtung zur Markierung von Werkstücken, die in eine Platte geschnitten oder gestanzt sind, sowie ein Ablaufsteuerverfahren für die Verarbeitung solcher geschnittener oder gestanzter Werkstücke.

Nach dem vollständigen Zerschneiden oder Stanzen einer Blechplatte bzw. -tafel in viele verschiedene Blechteile (Werkstücke) mittels z.B. einer Laser- oder Wasserstrahlschneidmaschine oder einer Stanzmaschine werden die einzelnen Blechteile in der Regel unterschiedlich weiterverarbeitet. Beispielsweise müssen Blechteile aus der zerschnittenen bzw. gestanzten Blechtafel für eine Einzelverarbeitung oder -verwendung einzeln oder für eine gruppenweise Verarbeitung oder Verwendung sortiert entnommen oder als Ausschussteile entfernt werden. Um einem Bediener, insbesondere bei vielen und in der Blechtafel abfalloptimiert angeordneten Blechteilen, das Auffinden, Entnehmen und Sortieren von Blechteilen zu erleichtern, ist es bekannt, auf Einrichteplänen, d.h. auf Papier, oder auch auf Bildschirmen oder Leinwänden das Schnitt- oder Stanzmuster der Blechtafel anzuzeigen und dabei die geschnittenen bzw. gestanzten Blechteile entsprechend ihren zugehörigen Aufträgen unterschiedlich optisch zu markieren. Allerdings muss der Bediener das angezeigte Schnitt- oder Stanzmuster auf die Blechtafel und -teile gedanklich übertragen, was fehleranfällig ist und eine zusätzliche Belastung des Bedieners darstellt.

Demgegenüber ist es die Aufgabe der vorliegenden Erfindung, eine Vorrichtung bereitzustellen, mit der die in eine Platte geschnittenen oder gestanzten Werkstücke dem Bediener einfacher angezeigt werden können, sowie ein Ablaufsteuerverfahren für die Weiterverarbeitung oder -verwendung solcher geschnittener oder gestanzter Werkstücke anzugeben.

Diese Aufgabe wird erfindungsgemäß gelöst durch eine Vorrichtung zur Markierung von Werkstücken, die in eine Platte geschnitten oder gestanzt sind, mit mindestens einem Projektor, der unterschiedliche optische Markierungen auf die geschnittenen bzw. gestanzten Werkstücke projiziert.

Statt die in eine Platte, z.B. eine Blechtafel, geschnittenen Werkstücke auf einem Einrichteplan, einer Leinwand oder einem Bildschirm indirekt zu visualisieren, wird erfindungsgemäß vom Projektor ein flächiges Projektionsbild, das die unterschiedlichen Markierungen aufweist, direkt auf die geschnittenen bzw. gestanzten Werkstücke projiziert. Diese Markierungen werden dem Bediener direkt auf den in die Platte geschnittenen bzw. gestanzten Werkstücken optisch angezeigt, d.h. direkt visualisiert. Entsprechend diesen Markierungen werden die einzelnen Werkstücke vom Bediener entnommen und für die nächsten Arbeitsschritte weiterverarbeitet oder -verwendet, z.B. aussortiert, gruppiert, identifiziert, gekennzeichnet, nachbearbeitet oder vermessen. Die Werkstücke können aus einer Blech- oder Kunststofftafel oder auch aus folienbeschichteten Flachmaterialien geschnitten oder gestanzt sein. Die erfindungsgemäße Vorrichtung ist bei allen Laser- oder Wasserstrahlschneidanlagen, die zweidimensionale Platten bearbeiten, sowie bei Stanzanlagen einsetzbar und zwar bevorzugt an einer zentralen Verarbeitungsstation, wie z.B. an einem zentralen Plattenauflager oder einem Palettenwechsler für bearbeitete Platten.

Bei besonders bevorzugten Ausführungsformen der Erfindung ist der Projektor auf der dem Bediener zugewandten Seite der bearbeiteten Platte angeordnet, also normalerweise oberhalb der bearbeiteten Platte. Aber auch eine Anordnung des Projektors auf der dem Bediener abgewandten Seite der bearbeiteten Platte ist möglich, um die einzelnen Werkstücke durch ihre von unten angeleuchteten Schnitt- bzw. Stanzkonturen oder von oben erkennbar optisch zu markieren. Diese Anordnung des Projektors eignet sich insbesondere für transparente Werkstücke, wie z.B. Glas, bei denen die auf die Werkstückunterseite projizierten Markierungen auch von oben sichtbar sind.

Vorzugsweise weisen die projizierten Markierungen unterschiedliche Farben und/oder unterschiedliche Geometrien und/oder unterschiedliche Konturen und/oder unterschiedliche Beschriftungen und/oder unterschiedliche Grafiken auf. So können beispielsweise alle Werkstücke, die zum gleichen Auftrag gehören, mit der gleichen Farbe markiert sein, oder die Entnahmereihenfolge der Werkstücke wird durch Abbilden der jeweiligen Reihenfolgeziffern auf den Werkstücken optisch vorgegeben. Auf den Werkstücken können auch Wörter, wie z.B. "Nachmessen", "Ausschuss" etc., abgebildet werden, die dem Bediener die weitere Verarbeitung oder Verwendung der einzelnen Werkstücke optisch vorgeben. Weiterhin können auf den einzelnen Werkstücken bestimmte Positionen optisch hervorgehoben werden, die eine besondere Verarbeitung durch den Bediener erfordern.

Bevorzugt ist der Projektor ein handelsüblicher Beamer, der über einen Rechner (Computer) angesteuert wird. Die gewünschten Markierungen werden vom Computer als Grafik oder Schriftzug erzeugt und vom Beamer direkt auf das Werkstück projiziert.

Die oben genannte Aufgabe wird auch gelöst durch ein Ablaufsteuerverfahren für die Weiterverarbeitung oder -verwendung von Werkstücken, die in eine Platte geschnitten oder gestanzt sind, wobei erfindungsgemäß abhängig von der jeweiligen Weiterverarbeitung oder -verwendung der geschnittenen bzw. gestanzten Werkstücke unterschiedliche optische Markierungen auf die geschnittenen bzw. gestanzten Werkstücke projiziert werden und diese Werkstücke entsprechend ihren optischen Markierungen weiterverarbeitet oder -verwendet werden.

Vorzugsweise werden auf die geschnittenen bzw. gestanzten Werkstücke Markierungen unterschiedlicher Farben und/oder unterschiedlicher Geometrien und/oder unterschiedlicher Konturen und/oder unterschiedlicher Beschriftungen und/oder unterschiedlicher Grafiken projiziert und so für unterschiedliche Weiterverarbeitungen und -verwendungen markiert. Diese Weiterverarbeitungen und -verwendungen können manuell durch den Bediener oder automatisiert mithilfe geeigneter Markierungserfassungseinrichtungen erfolgen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: die erfindungsgemäße Markierungsvorrichtung für in eine Platte geschnittene Werkstücke; und
- Fig. 2: ein Flussdiagramm des erfindungsgemäßen Ablaufsteuerverfahrens für die Verarbeitung von geschnittenen Werkstücken einer Platte.

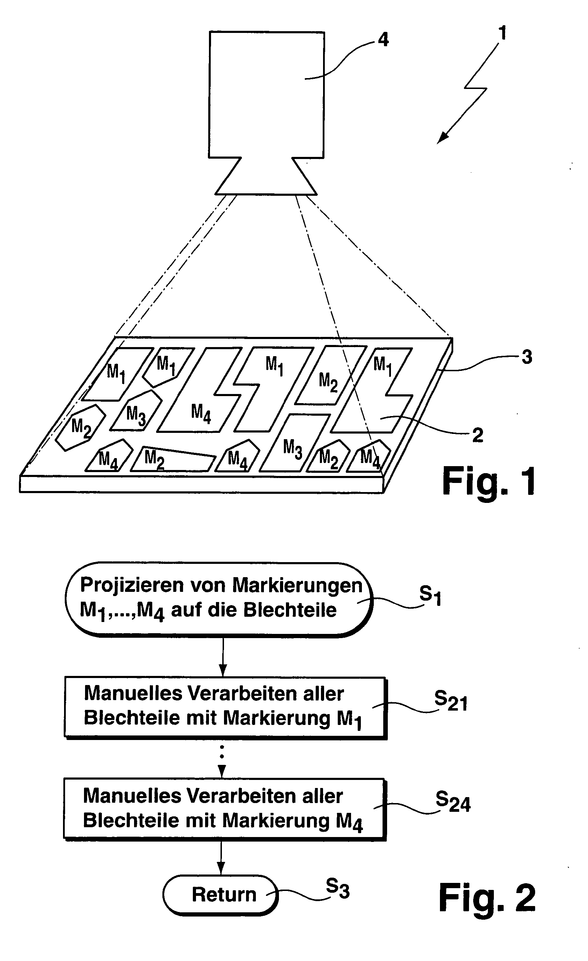

Die in **Fig. 1** gezeigte Vorrichtung **1** dient zur Markierung von Werkstücken (Blechteilen) **2 ,** die in eine Platte (Blechtafel) **3,** z.B. mittels eines Lasers, geschnitten sind.

Die Vorrichtung 1 weist oberhalb der zerschnittenen Platte 3 einen Projektor **4** auf, in dessen Bildebene die Platte 3 angeordnet ist. Der z.B. als Beamer ausgestaltete Projektor 4 projiziert vier unterschiedliche optische Markierungen **M**_{**1**} **- M**_{**4**} auf die einzelnen Werkstücke 2. Die einzelnen Werkstücke 2 werden vom Bediener entnommen und entsprechend ihren Markierungen M₁ - M₄ für die nächsten Arbeitsschritte weiterverarbeitet oder -verwendet, z.B. aussortiert, gruppiert, identifiziert, gekennzeichnet, nachbearbeitet oder vermessen. Die projizierten Markierungen M₁ - M₄ können unterschiedliche Farben, unterschiedliche Geometrien, unterschiedliche Konturen, unterschiedliche Beschriftungen oder unterschiedliche Grafiken aufweisen, um die nächsten Arbeitsschritte unterscheidbar zu kennzeichnen. Mit Hilfe der Vorrichtung 1 können in einer komplett geschnittenen Platte 3 mit vielen verschiedenen Werkstücken 2 einzelne Werkstücke dem Bediener optisch direkt angezeigt und auf diesen einzelnen Werkstücken noch Positionen, Grafiken etc. optisch vorgegeben werden.

In **Fig. 2** ist eine Ablaufsteuerung (Ablaufprogramm) für die Verarbeitung der in die Platte 3 geschnittenen Werkstücke 2 anhand eines Flussdiagramms gezeigt. Zuerst werden in einem Schritt **S1** die vier unterschiedlichen Markierungen M₁ - M₄ auf die Werkstücke 2 mittels der Vorrichtung 1 projiziert. Dann werden in den Schritten **S**_{**21**} bis **S**_{**24**} die Werkstücke 2 vom Bediener entnommen und entsprechend ih rer jeweiligen Markierung M₁ - M₄ weiterverarbeitet, z.B. gekennzeichnet oder nachbearbeitet, oder weiterverwendet, z.B. aussortiert oder gruppiert, gefolgt von der Beendigung des Programms (Schritt **S3**).

## Patentansprüche

1. Vorrichtung (1) zur Markierung von Werkstücken (2), die in eine Platte (3) geschnitten oder gestanzt sind, mit mindestens einem Projektor (4), der unterschiedliche optische Markierungen (M₁ - M₄) auf die geschnittenen bzw. gestanzten Werkstücke (2) projiziert.

2. Vorrichtung nach Anspruch 1, **dadurch gekennzeichnet, dass** der Projektor (4) auf der dem Bediener zugewandten Seite der bearbeiteten Platte (3), insbesondere oberhalb der bearbeiteten Platte (3), angeordnet ist.

3. Vorrichtung nach Anspruch 1, **dadurch gekennzeichnet, dass** der Projektor (4) auf der dem Bediener abgewandten Seite der bearbeiteten Platte (3), insbesondere unterhalb der bearbeiteten Platte (3), angeordnet ist.

4. Vorrichtung nach einem der vorhergehenden Ansprüche, **dadurch gekennzeichnet, dass** die projizierten Markierungen (M₁ - M₄) unterschiedliche Farben und/oder unterschiedliche Geometrien und/oder unterschiedliche Konturen und/oder unterschiedliche Beschriftungen und/oder unterschiedliche Grafiken aufweisen.

5. Vorrichtung nach einem der vorhergehenden Ansprüche, **dadurch gekennzeichnet, dass** der Projektor (4) ein computerangesteuerter Beamer ist.

6. Ablaufsteuerverfahren für die Weiterverarbeitung oder -verwendung von Werkstücken (2), die in eine Platte (3) geschnitten oder gestanzt sind, insbesondere unter Verwendung der Vorrichtung (1) nach einem der vorhergehenden Ansprüche,
**dadurch gekennzeichnet,**
**dass** abhängig von der jeweiligen Weiterverarbeitung oder -verwendung der geschnittenen bzw. gestanzten Werkstücke (2) unterschiedliche optische Markierungen (M₁ - M₄) auf die geschnittenen bzw. gestanzten Werkstücke (2) projiziert werden und diese Werkstücke (2) entsprechend ihrer optischen Markierung (M₁ - M₄) weiterverarbeitet oder -verwendet werden.

7. Ablaufsteuerverfahren nach Anspruch 6, **dadurch gekennzeichnet, dass** auf die geschnittenen bzw. gestanzten Werkstücke (2) Markierungen (M₁ - M₄) unterschiedlicher Farben und/oder unterschiedlicher Geometrien und/oder unterschiedlicher Konturen und/oder unterschiedlicher Beschriftungen und/oder unterschiedlicher Grafiken projiziert werden.

8. Ablaufsteuerverfahren nach Anspruch 6 oder 7, **dadurch gekennzeichnet, dass** die geschnittenen bzw. gestanzten Werkstücke (2) für eine manuelle oder automatisierte Weiterverarbeitung markiert werden.
